# EUROPEAN PATENT SPECIFICATION

(11) **EP 2 700 842 B1**
(45) Date of publication and mention of the grant of the patent: **24.02.2016**
(21) Application number: 12181737.3
(22) Date of filing: 24.08.2012
(51) Int. Cl.: F16G 11/10

(54) **Device for securing a rope**
Vorrichtung zum Sichern eines Kabels
Dispositif permettant de fixer une corde

(43) Date of publication of application: 26.02.2014
(73) Proprietor: Unimer Holding AB, 302 62 Halmstad (SE)
(72) Inventor: Bohman, Nils Erik, 305 78 Kvibille (SE)
(74) Representative: Awapatent AB

(56) References cited:
- WO-A2-2005/027359
- FR-A- 1 369 566
- GB-A- 1 009 003
- US-A- 1 459 265
- US-A- 3 344 485

## Description

### Technical field

The present invention refers to a device for securing a rope, comprising a resilient element and at least one locking device, the resilient element comprising at least one slit. The invention also refers to a method of securing a rope.

### Technical background

US-1, 459, 265 reveals a rope clamp for fastening together two ropes and consists of a shorter member arranged at least partially in a recess in a longer member. A first rope is used for attaching the shorter member to the longer member and i.e. the shorter member is held in place by one of two ropes. The end of which rope, is passed twice through both clamping members, and being secured to the longer member by a knot. The second rope, the rope to be secured with the device, is also threaded through drilled holes of the device.

GB-1,009,003 reveals a rope clamp comprising several parts, which are to be arranged around a rope in order to ,e.g., attach a thimble to the end of a rope. Such a rope clamp relies on the pressure exerted by all of the components onto the rope, and therefore does not stretch.

US-2,878,013 and US-3,817,507 reveal previously known resilient elements which are to be used, e.g., together with ropes when towing vehicles or mooring boats, in order to allow absorbed stretching as the rope and the resilient element are exerted to a tension force.

One disadvantage with such resilient elements is that the resilient element has to be threaded onto the rope, which is time-consuming and often difficult when the rope, which usually is extremely stiff, has to be bent into curves having a small radii of curvature and be brought through several openings in a relatively thick rubber bar, in which the openings have essentially the same diameter as the rope.

This also implies that the resilient element must be adapted to the dimension of the rope and thus that several different resilient elements are required to cover a certain interval of different ropes.

### Summary of the invention

It is an object of the present invention to mitigate the above problems, and to provide a device which need not be threaded onto the rope, may be easily applied at any desired position along the rope, and is designed such

According to a first aspect of the present invention, these objects are achieved by a device for securing a rope, comprising a resilient element and at least one locking device, the resilient element comprising at least one slit, the locking device being adapted for securing engagement of the rope within an inside of the locking device, and the locking device being adapted for mating engagement with an inside of the slit.

The combination of a slit and a locking element provides a simple solution in which the securing device need not be threaded onto the rope, which is very much an advantage since, e.g., a rope used for mooring a boat often is approximately 10 meters long. Hence, the device may be applied at any desired position along the rope without pulling up to 10 meters of rope through an opening in the device.

The inside of the slit may be provided with a lining element, such that the slit is reinforced, providing it with a constant shape which does not vary even during tensioning of the resilient element.

In one embodiment, the locking device is adapted for self-locking engagement with the slit in all directions but a direction which is opposite to a direction in which the locking device mates with the slit. Hence, the locking device is firmly secured in the slit.

The locking device is substantially U- or V-shaped, comprising at least two leg portions. Such a locking device is adapted for receiving a rope while still being somewhat resilient during insertion into the slit.

A free end of each leg portion may be provided with at least one protrusion.

In one embodiment, the at least one protrusion is adapted for eventually abutting against an embedded surface of the resilient element and/or lining element as the locking device is inserted into the slit, providing a stop in the insertion direction such that the locking device does not slip all the way through the slit.

The protrusion may extend in a plane substantially perpendicular to the direction in which said locking device mates with said slit.

Further, the locking device, the slit, and/or the lining element may have an essentially tapered shape in a plane perpendicular to the direction in which the locking device mates with the slit, preventing that the locking device is incorrectly fitted into the slit.

In one embodiment, the resilient element may comprise an elongated body having one slit at each end which is a common shape of such resilient elements.

The tapered shape of the slit and/or the lining element arranged at one end of the resilient element may widen in a direction from the slit arranged at the other end of the resilient element, such that the rope is subjected to maximum locking force in the pulling direction of the rope.

According to a second aspect of the present invention, these objects are achieved by a method of securing a rope, comprising the steps of inserting a portion of the rope into a first side of a slit in a resilient element such that the portion forms a continuous loop on a second, opposite side of the slit, inserting a locking device into the slit, inserting a part of the rope loop into the locking device, pulling the parts of the rope which still extend on the first side such that the rope portion is pulled further into the locking device, whereby the rope eventually mates with an inside of the locking device such that the rope is secured within an inside of the locking device.

Further, the locking device is substantially U- or V-shaped, and the centre portion of the locking device may be directed towards the slit when the locking device is inserted into the slit.

Also, at least one free end of the locking device may be provided with a protrusion which abuts against an embedded surface of the resilient element and/or the lining element as the locking device mates with the slit.

### Brief description of the drawings

This and other aspects of the present invention will now be described in more detail, with reference to the appended drawings showing a currently preferred embodiment of the invention.
Figure 1 shows a bottom view and a top view, a and b respectively, of an embodiment of the device according to the present invention.
Figure 2 shows a bottom view a and two side views, b and c, of an embodiment of the locking device according to the present invention.
Figure 3 shows a partially cut-away side view of the embodiment in figure 1, when a rope is in the process of being secured.
Figure 4 shows a partially cut-away side view of the embodiment in figure 1, when a rope is fully secured.

### Detailed description of preferred embodiments

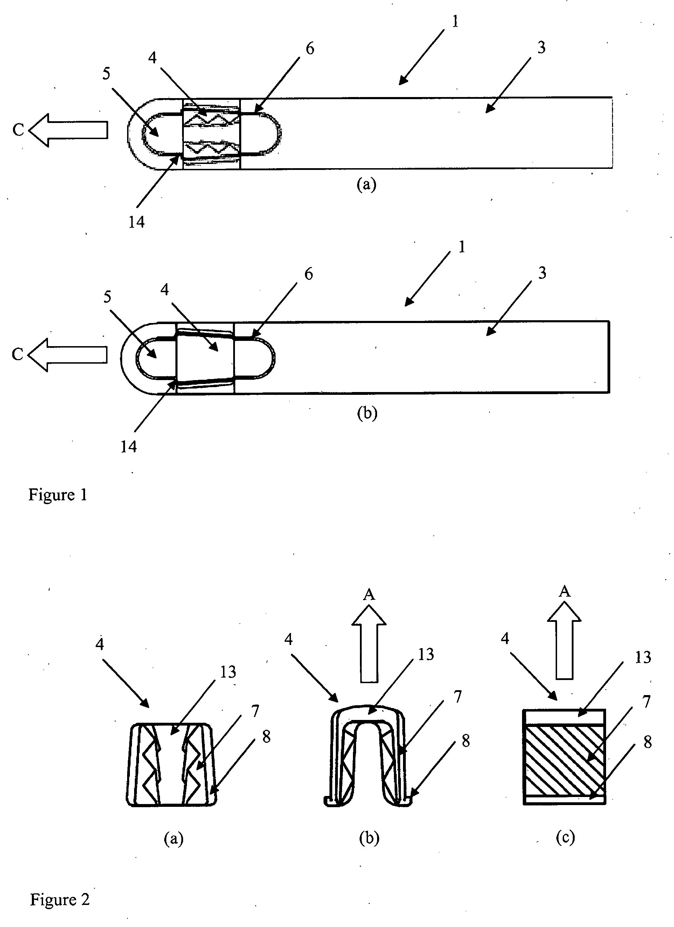

Figure 1 shows a device 1 for securing a rope 2, for example when mooring a boat, comprising a resilient element 3 and at least one locking device 4. The device 1 is to be fitted onto a rope 2 or a corresponding elongated and flexible tension element such as a wire, a chain, or a cable.

The resilient element 3 comprises an elongated body of rubber or other elastic material, having one slit 5 at each end. Each slit 5 is provided with a lining element 6 covering the inside of the slit 5 in order to reinforce the slit 5 and to provide a slit 5 having a constant shape which does not vary during tensioning of the resilient element 3. The lining element 6 is made of plastic, aluminium, zinc, or any other suitable kind of metal, and it is vulcanized into the resilient element 3.

Figure 2 shows the locking device 4 in more detail. The locking device 4 is adapted for mating engagement with the inside of the slit 5 and is adapted for securing engagement of the rope 2 within an inside of the locking device 4. The locking device 4 is further adapted for self-locking engagement with the slit 5 in all directions but the direction B which is opposite to the direction A in which the locking device 4 mates with the slit 5. This means that the locking device 4 may be removed from the slit 5 by extracting it in a direction B which is opposite the insertion direction A. In all other directions, the locking device 4 is firmly located within the slit 5 when the locking device 4 is fully inserted into the slit 5. The inner shape of the lining element 6 and the outer shape of the locking device 4 are such that they correspond more or less exactly to each other.

Preferably, the locking device 4 is U- or V-shaped, in a direction which corresponds to that of the insertion direction A mentioned above, such that it comprises two leg portions 7 and a portion which can be called a centre portion 13, provided between the two leg portions 7. The inside of the leg portions 7 is supported by a number of angled, v-shaped beams, as seen, e.g., in figure 2b. The inside surface itself is essentially straight, convex, or concave. Further, the inside of the locking device 4 is somewhat tapered towards its centre portion 13 such that the pressure on the rope 2 from the inside of the locking device 4 increases as the rope 2 is pulled towards the centre portion 13, hence locking the rope 2 tighter.

The free end of each leg portion 7, i.e. the end opposite the centre portion 13, is provided with a protrusion 8. The protrusion 8 is adapted for eventually abutting against an embedded surface of the resilient element 3 and/or the lining element 6 as the locking device 4 is inserted into the slit 5. I.e., the resilient element 3 and/or the lining element 6 are preferably provided with recesses into which the protrusions 8 fit such that the outer surface of the resilient element 3 stays smooth and uniform and the protrusions 8 of the locking device 4 do not extend outside this outer surface. The protrusions 8 extend from the legs 7 in a plane which is substantially parallel to that of the outer surface of the resilient element, and preferably extend in directions from each other, such that they lock the locking device 4 in the direction A in which the locking device 4 is inserted into the slit 5.

The locking device 4, slit 5, and/or lining element 6 all have an essentially tapered shape in a plane which is perpendicular to the direction A in which said locking device 4 mates with the slit 5. The tapering is arranged such that the locking device 4 widens in a direction C outwards, i.e. in a direction C from the slit 5 arranged at the other end of the resilient element 3. In other words, the tapered shape widens in the direction C in which the rope 2, arranged in the slit 5, pulls on the resilient element 3. The slit 5 itself is tapered in a way corresponding to the tapering of the locking device 4, such that the locking device 4 fits into the slit 5. The widest end of the slit 5 is provided with two opposite steps 14 which are arranged perpendicularly to the direction C of the tapering, such that the widest end of the locking device 4 will abut against the steps 14 when arranged within the slit 5. Hence, the locking device 4 will bear against the steps 14 when the rope 2 and the resilient element 3 are tensioned, i.e. the locking device 4 is firmly arranged within the slit 5 independently of the amount of tension in the resilient element 3.

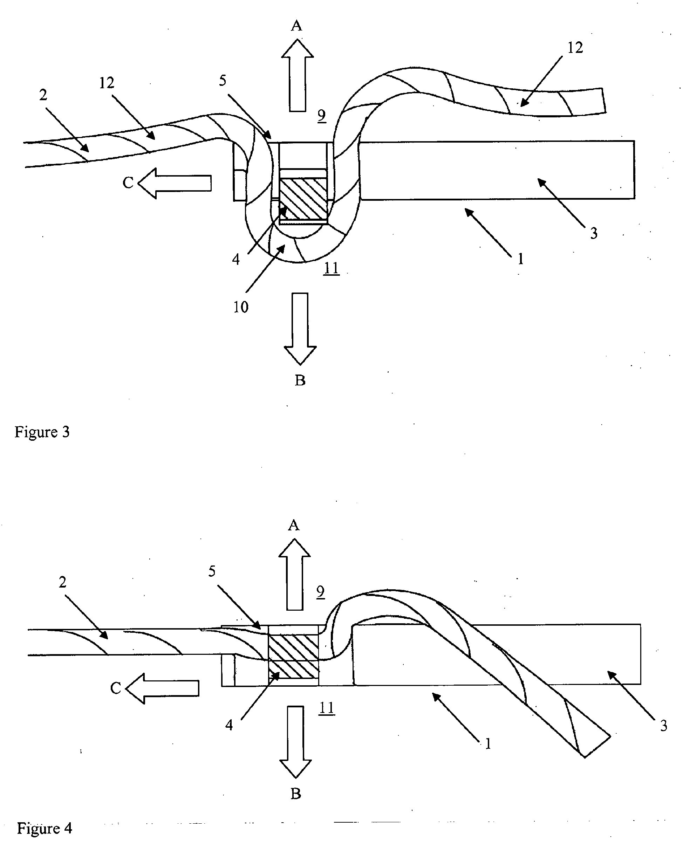

Figures 3 and 4 show how to fit the locking device 4 into the slit 5 of the resilient element 3, and the rope 2 into the locking device 4.

Firstly, a portion of the rope 2, which does not need to comprise an end of the rope, is inserted into a first side 9 of the slit 5 and extends through the slit 5 such that the rope portion forms a continuous loop 10 on the second, opposite side 11 of the slit 5. I.e., the rope 2 enters the slit 5 on one side 9, extends from the slit 5 on the second side 11, forms a loop 10, enters the slit 5 on the second side 11, and exits the slit 5 on the first side 9. The locking device 4, as described above, is placed in the slit 5 such that its centre portion 13 is the first part of the locking device 4 to enter into the slit 5. The free ends of the locking device 4 are provided with protrusions 8 which eventually abut against embedded surfaces in the resilient element 3 and/or the lining element 6, such that the locking device 4 cannot be pulled all the way through the slit 5 to the other side, but instead remains locked at an end position where the entire locking device 4 is located within the slit 5. Thereafter, the loop shaped rope portion 10 is inserted into the inside of the locking device 4 such that the U- or V-shaped locking device 4 substantially surrounds the rope 2. Thereafter, the two parts 12 of the rope which extend on the first side 9 of the slit 5 are pulled such that the rope 2 is completely and firmly pulled into the locking device 4, in a direction A towards the first side 9 of the slit 5. In this final position, the rope 2 preferably, but not necessarily, abuts against the inside of the centre portion 13 of the locking device 4 such that the rope 2 cannot slip out of the slit 5. This way, the rope 2 is secured inside the locking device 4 while the locking device 4 is secured inside the slit 5.

If the resilient element 3 is provided with one more slit 5, the rope 2 is preferably wound around the resilient element 3 towards the second slit 5, where the rope 2 is secured in a second locking device 4 in the same way as in the first slit 5.

The person skilled in the art realizes that the present invention by no means is limited to the preferred embodiments described above. On the contrary, many modifications and variations are possible within the scope of the appended claims. For example, the resilient element may have any suitable shape or any desired number of slits.

## Claims

1. Device (1) for securing a rope (2), comprising a resilient element (3) and at least one locking device (4),
said resilient element (3) comprising at least one slit (5),
said locking device (4) being adapted for securing engagement of said rope (2) within an inside of said locking device (4), and
said locking device (4) being adapted for mating engagement with an inside of said slit (5), whereby each slit (5) engages with only one locking device (4), **characterized in that** *said locking device (4) is substantially U- or V-shaped, comprising at least two leg portions (7)*

2. Device (1) according to claim 1, wherein the inside of said slit (5) is provided with a lining element (6).

3. Device (1) according to claim 1 or 2, wherein said locking device (4) is adapted for self-locking engagement with said slit (5) in all directions but a direction (B) which is opposite to a direction (A) in which said locking device (4) mates with said slit (5).

4. Device (1) according to claim 4, wherein a free end of each leg portion (7) is provided with at least one protrusion (8).

5. Device (1) according to claim 5, wherein said at least one protrusion (8) is adapted for eventually abutting against an embedded surface of said resilient element (3) and/or lining element (6) as said locking device (4) is inserted into said slit (5).

6. Device (1) according to claim 6, wherein said protrusion (8) extends in a plane perpendicular to the direction (A) in which said locking device (4) mates with said slit (5).

7. Device (1) according to claim 1-7, wherein said locking device (4), said slit (5), and/or said lining element (6) have an essentially tapered shape in a plane perpendicular to the direction (A) in which said locking device (4) mates with said slit (5).

8. Device (1) according to claim 8, wherein said resilient element (3) comprises an elongated body having one slit (5) at each end.

9. Device (1) according to claim 8 or 9, wherein said tapered shape of said slit (5) and/or said lining element (6) arranged at one end of said resilient element (3) widens in a direction (C) from the slit (5) arranged at the other end of said resilient element (3).

10. Method of securing a rope (2) using a device for securing a rope according to claim 1 comprising the steps of
- inserting a portion of said rope (2) into a first side (9) of a slit (5) in a resilient element (3) such that said portion forms a continuous loop (10) on a second, opposite side (11) of said slit, (5)
- inserting a substantially U- or V-shaped locking device (4) into said slit (5),
- inserting a part of said rope loop (10) into said locking device (4),
- pulling the parts (12) of said rope (2) which still extend on said first side (9) such that said rope portion (10) is pulled further into said locking device (4), whereby said rope (2) eventually mates with an inside of said locking device (4) such that said rope (2) is secured within an inside of said locking device (4).

11. Method according to claim 11, wherein the centre portion (13) of said locking device (4) is directed towards said slit (5) when said locking device (4) is inserted into said slit (5).

12. Method according to claim 11 or 12, wherein at least one free end of said locking device (4) is provided with a protrusion (8) which eventually abuts against an embedded surface of said resilient element (3) and/or said lining element (6) as said locking device (4) mates with said slit (5).

## Patentansprüche

1. Vorrichtung (1) zum Sichern eines Kabels (2), umfassend ein elastisches Element (3) und zumindest eine Sperrvorrichtung (4),
wobei das elastische Element (3) zumindest einen Schlitz (5) umfasst,
wobei die Sperrvorrichtung (4) zur Sicherungsineingriffnahme des Kabels (2) innerhalb einer Innenseite der Sperrvorrichtung (4) geeignet ist, und
wobei die Sperrvorrichtung (4) zur Passineingriffnahme mit einer Innenseite des Schlitzes (5) geeignet ist, wobei jeder Schlitz (5) mit nur einer Sperrvorrichtung (4) in Eingriff tritt, **dadurch gekennzeichnet, dass**
die Sperrvorrichtung (4) im Wesentlichen U- oder V-förmig ist und zumindest zwei Schenkelabschnitte (7) umfasst.

2. Vorrichtung (1) nach Anspruch 1, wobei die Innenseite des Schlitzes (5) mit einem Auskleidungselement (6) versehen ist.

3. Vorrichtung (1) nach einem der Ansprüche 1 oder 2, wobei die Sperrvorrichtung (4) zur selbstsperrenden Ineingriffnahme mit dem Schlitz (5) in allen Richtungen außer einer Richtung (B) geeignet ist, die eine Gegenrichtung zu einer Richtung (A) ist, in der die Sperrvorrichtung (4) mit dem Schlitz (5) zusammenpasst.

4. Vorrichtung (1) nach Anspruch 3, wobei ein freies Ende jedes Schenkelabschnitts (7) mit zumindest einem Vorsprung (8) versehen ist.

5. Vorrichtung (1) nach Anspruch 4, wobei der zumindest eine Vorsprung (8) zum letztendlichen Angrenzen an eine eingebettete Oberfläche des elastischen Elements (3) und/oder Auskleidungselements (6) geeignet ist, wenn die Sperrvorrichtung (4) in den Schlitz (5) eingeführt wird.

6. Vorrichtung (1) nach Anspruch 5, wobei der Vorsprung (8) in einer Ebene verläuft, die senkrecht zur Richtung (A) verläuft, in der die Sperrvorrichtung (4) mit dem Schlitz (5) zusammenpasst.

7. Vorrichtung (1) nach einem der Ansprüche 1 bis 6, wobei die Sperrvorrichtung (4), der Schlitz (5) und/oder das Auskleidungselement (6) eine sich im Wesentlichen verjüngende Form in einer Ebene aufweisen, die senkrecht zur Richtung (A) verläuft, in der die Sperrvorrichtung (4) mit dem Schlitz (5) zusammenpasst.

8. Vorrichtung (1) nach Anspruch 7, wobei das elastische Element (3) einen gestreckten Körper mit einem Schlitz (5) an jedem Ende umfasst.

9. Vorrichtung nach einem der Ansprüche 7 oder 8, wobei sich die sich verjüngende Form des Schlitzes (5) und/oder des Auskleidungselements (6), der bzw. das an einem Ende des elastischen Elements (3) angeordnet ist, in einer Richtung (C) vom Schlitz (5) erweitert, der am anderen Ende des elastischen Elements (3) angeordnet ist.

10. Verfahren zum Sichern eines Kabels (2) unter Benutzung einer Vorrichtung zum Sichern eines Kabels nach Anspruch 1, umfassend die Schritte des
- derartigen Einführens eines Abschnitts des Kabels (2) in eine erste Seite (9) eines Schlitzes (5) in einem elastischen Element (3), dass der Abschnitt eine fortlaufende Schleife (10) auf einer zweiten, gegenüberliegenden Seite (11) des Schlitzes (5) ausbildet,
- Einführens einer im Wesentlichen U-förmigen oder V-förmigen Sperrvorrichtung (4) in den Schlitz (5),
- Einführens eines Teils des Kabelabschnitts (10) in die Sperrvorrichtung (4),
- Ziehens der Teile (12) des Kabels (2), die immer noch auf der ersten Seite (9) verlaufen, sodass der Kabelabschnitt (10) weiter in die Sperrvorrichtung (4) gezogen wird,
wobei das Kabel (2) letztendlich mit einer Innenseite der Sperrvorrichtung (4) zusammenpasst, sodass das Kabel (2) innerhalb einer Innenseite der Sperrvorrichtung (4) gesichert ist.

11. Verfahren nach Anspruch 10, wobei der Mittelabschnitt (13) der Sperrvorrichtung (4) zum Schlitz (5) hin gerichtet wird, wenn die Sperrvorrichtung (4) in den Schlitz (5) eingeführt wird.

12. Verfahren nach einem der Ansprüche 10 oder 11, wobei zumindest ein freies Ende der Sperrvorrichtung (4) mit einem Vorsprung (8) versehen ist, der letztendlich an eine eingebettete Oberfläche des elastischen Elements (3) und/oder des Auskleidungselements (6) angrenzt ist, wenn die Sperrvorrichtung (4) mit dem Schlitz (5) zusammenpasst.

## Revendications

1. Dispositif (1) permettant de fixer une corde (2), comprenant un élément élastique (3) et au moins un dispositif de verrouillage (4),
ledit élément élastique (3) comprenant au moins une fente (5),
ledit dispositif de verrouillage (4) étant adapté pour fixer l'engagement de ladite corde (2) dans un intérieur dudit dispositif de verrouillage (4), et
ledit dispositif de verrouillage (4) étant adapté pour s'engager par accouplement avec un intérieur de ladite fente (5), moyennant quoi chaque fente (5) s'engage avec un seul dispositif de verrouillage (4), **caractérisé en ce que**
ledit dispositif de verrouillage (4) présente substantiellement une forme en U ou en V comprenant au moins deux parties de jambe (7).

2. Dispositif (1) selon la revendication 1, dans lequel l'intérieur de ladite fente (5) est pourvu d'un élément de revêtement (6).

3. Dispositif (1) selon la revendication 1 ou 2, dans lequel ledit dispositif de verrouillage (4) est adapté pour s'engager par auto-verrouillage avec ladite fente (5) dans toutes les directions, hormis une direction (B) opposée à une direction (A) dans laquelle ledit dispositif de verrouillage (4) s'accouple avec ladite fente (5).

4. Dispositif (1) selon la revendication 3, dans lequel une extrémité libre de chaque partie de jambe (7) est pourvue d'au moins une saillie (8).

5. Dispositif (1) selon la revendication 4, dans lequel ladite au moins une saillie (8) est adaptée pour éventuellement buter contre une surface encastrée dudit élément élastique (3) et/ou dudit élément de revêtement (6) lorsque ledit dispositif de verrouillage (4) est inséré dans ladite fente (5).

6. Dispositif (1) selon la revendication 5, dans lequel ladite saillie (8) s'étend dans un plan perpendiculaire à la direction (A), dans laquelle ledit dispositif de verrouillage (4) s'accouple avec ladite fente (5).

7. Dispositif (1) selon la revendication 1 - 6, dans lequel ledit dispositif de verrouillage (4), ladite fente (5) et/ou ledit élément de revêtement (6) présentent une forme essentiellement conique dans un plan perpendiculaire à la direction (A) dans laquelle ledit dispositif de verrouillage (4) s'accouple avec ladite fente (5).

8. Dispositif (1) selon la revendication 7, dans lequel ledit élément élastique (3) comprend un corps allongé présentant une fente (5) à chaque extrémité.

9. Dispositif (1) selon la revendication 7 ou 8, dans lequel ladite forme conique de ladite fente (5) et/ou ledit élément de revêtement (6) agencé à une extrémité dudit élément élastique (3) s'élargissent dans une direction (C) à partir de la fente (5) agencée à l'autre extrémité dudit élément élastique (3).

10. Procédé pour la fixation d'une corde (2) à l'aide d'un dispositif permettant de fixer une corde selon la revendication 1, comprenant les étapes suivantes
- insertion d'une partie de ladite corde (2) dans un premier côté (9) d'une fente (5) dans un élément élastique (3), de manière à ce que ladite partie forme une boucle continue (10) sur un deuxième côté opposé (11) de ladite fente (5),
- insertion d'un dispositif de verrouillage (4) présentant substantiellement une forme en U ou en V dans ladite fente (5),
- insertion d'une partie de ladite boucle de corde (10) dans ledit dispositif de verrouillage (4),
- traction des parties (12) de ladite corde (2) s'étendant encore sur le premier côté (9), de manière à tirer ladite partie de corde (10) davantage à l'intérieur dudit dispositif de verrouillage (4)
de telle façon que ladite corde (2) s'accouple finalement avec un intérieur dudit dispositif de verrouillage (4) de telle sorte que ladite corde (2) soit fixée dans un intérieur dudit dispositif de verrouillage (4).

11. Procédé selon la revendication 10, dans lequel la partie centrale (13) dudit dispositif de verrouillage (4) est dirigée vers ladite fente (5) lorsque ledit dispositif de verrouillage (4) est inséré dans ladite fente (5).

12. Procédé selon la revendication 10 ou 11, dans lequel au moins une extrémité libre dudit dispositif de verrouillage (4) est pourvue d'une saillie (8) butant éventuellement contre une surface encastrée dudit élément élastique (3) et/ou dudit élément de revêtement (6) lorsque ledit dispositif de verrouillage (4) s'accouple avec ladite fente (5).
